# EUROPÄISCHE PATENTSCHRIFT

(11) **EP 3 508 046 B1**
(45) Veröffentlichungstag und Bekanntmachung des Hinweises auf die Patenterteilung: **16.09.2020**
(21) Anmeldenummer: 19401000.5
(22) Anmeldetag: 03.01.2019
(51) Int. Cl.: A01C 7/08, A01C 21/00

(54) **VERFAHREN ZUM BETREIBEN EINER VERTEILMASCHINE**
METHOD FOR OPERATING A DISTRIBUTOR
PROCÉDÉ DE FONCTIONNEMENT D'UN ÉPANDEUR

(30) Priorität: 08.01.2018 DE 102018100235
(43) Veröffentlichungstag der Anmeldung: 10.07.2019
(73) Patentinhaber: Amazonen-Werke H. Dreyer GmbH & Co. KG, 49205 Hasbergen (DE)
(72) Erfinder: Flucke, Jan, 27798 Hude (DE); Düman, Fadil, 28197 Bremen (DE)

(56) Entgegenhaltungen:
- EP-A1- 2 342 963
- CA-A1- 2 650 340
- US-A1- 2016 157 420

## Beschreibung

Die Erfindung betrifft ein Verfahren zum Betreiben einer Verteilmaschine gemäß dem Oberbegriff des Patentanspruches 1.

Ein derartiges Verfahren ist in EP°2°238°819°B1 beschrieben. Dieses Verfahren ist zum Betreiben einer Verteilmaschine, die über ihre Arbeitsbreite gleichmäßig verteilte Ausbringelemente aufweist, geeignet. Die Ausbringelemente der als Sämaschine ausgeführten Verteilmaschine lassen sich hierbei unabhängig voneinander von einem Steuerungssystem steuern und so in zu- und abschaltbare Teilbreiten unterteilen. Das Steuerungssystem umfasst hierzu unter anderem zumindest einen Positionssensor, beispielsweise in Form eines GPS-Systems, um die Position der Teilbreiten zu ermitteln und die Teilbreiten in Abhängigkeit von ihrer ermittelten Position zu schalten. Des Weiteren ist das Steuerungssystem mit einem Speicher ausgestattet.

Zur Planung einer Bearbeitung eines mehrseitigen Feldes mittels der Sämaschine, werden in dem Speicher des Steuerungssystems neben den feldspezifischen Daten des Feldes, wie beispielsweise Feldgrenzen, zusätzlich geometrischen Daten der Sämaschine abgespeichert. Diese geometrischen Daten umfassen Informationen über die maximale Arbeitsbreite und die individuell zu- und abschaltbaren Teilbreiten der Sämaschine.

Das Verfahren nach EP°2°238°819°B1 sieht nun vor, dass für das zu bearbeitende Feld eine Anzahl von Bearbeitungsspuren bestimmt wird. Das Steuerungssystem berücksichtigt dabei die im Speicher abgelegten Informationen. Auf diese Weise wird für das zu bearbeitende Feld ein Bearbeitungsplan erzeugt, wobei der Bearbeitungsplan gleichförmig verteilte Bearbeitungsspuren aufweist. Um eine möglichst große Flächenleistung zu erreichen, werden Bearbeitungsspuren mit möglichst großer, d.h. voller, Arbeitsbreite angestrebt.

Zur möglichst flächendeckenden Bearbeitung des Feldes kann es in diesem Schritt notwendig sein zumindest eine Bearbeitungsspur mit zumindest teilweise abgeschalteten Teilbreiten vorzusehen. Eine solche Ausgleichs-Bearbeitungsspur mit teilweise abgeschalteten Teilbreiten wird erforderlich, falls die zuvor bestimmte Anzahl von Bearbeitungsspuren mit voller Arbeitsbreite der Sämaschine keine ganzzahlige Anzahl ergibt. In der Folge wird die bearbeitete Breite für diese Ausgleichs-Bearbeitungsspur durch abgeschaltete Teilbreiten reduziert, so dass das Feld anhand des Bearbeitungsplans möglichst optimal flächendeckend bearbeitet werden kann.

Mit Hilfe des vorstehend beschriebenen Verfahren zu betreibende, gattungsgemäße Sämaschinen weisen zwar unabhängig voneinander zu- und abschaltbare Teilbreiten auf. Allerdings lassen sich bei gattungsgemäßen Maschinen lediglich die das auszubringende Saatgut dosierenden Dosierorgane zur Unterbrechung der Ausbringung von Saatgut abschalten und nicht jedoch die Bodenbearbeitungswerkzeuge abgeschalteter Ausbringelemente vom oder aus dem Feldboden ab- oder ausheben. Damit wünschenswerter Weise kein Boden außerhalb der Feldgrenzen bearbeitet wird, wodurch die Ausbringelemente zudem beschädigt werden könnten, ist zu beachten, dass sich alle Ausbringelemente während der Bearbeitung stets innerhalb der Feldgrenzen befinden. Dies führt bei Durchführung der Feldarbeit anhand eines nach dem vorstehend beschriebenen Verfahren erzeugten Bearbeitungsplans inklusive angelegter Ausgleichs-Bearbeitungsspur zu nachteiligen Arbeitsergebnissen: Die Ausgleichs-Bearbeitungsspur wird als letzte zu bearbeitende Spur bestimmt. Weiter sollen sich die Ausbringelemente nicht außerhalb der Feldgrenzen befinden, was zwangsweise dazu führt, dass der Bearbeitungsplan vorsieht, dass bereits bearbeitete Teile des Feldes erneut von abgeschalteten Ausbringelementen überfahren und bearbeitet werden. Dies hat den nachteiligen Effekt, dass zuvor besäte Reihen während der erneuten Überfahrt durch die Bodenbearbeitungswerkzeuge durchmischt werden.

Die Durchmischung bereits besäter Bereiche verringert nachträglich die Ausbringqualität und beeinflusst damit das Arbeitsergebnis in negativer Weise. Die reduzierte Ausbringqualität zeigt sich durch verschlechterten Aufgang der ausgebrachten Saat und in Folge dessen einer geschmälerten Ernte. Weiter nachteilig ist, dass der Boden wiederholt überfahren und zugleich verdichtet wird. So werden ungleichmäßige und unerwünschte Voraussetzungen für spätere Arbeitsgänge geschaffen.

Weitere derartige Verfahren sind aus CA 2 650 340 A1, US 2016/157420 A1 und EP 2 342 963 A1 bekannt. Bei diesen Verfahren wird zusätzlich bestimmt, dass die zur Bearbeitung der Ausgleichs-Bearbeitungsspur abgeschalteten Teilbreiten sich in einem noch zur Bearbeitung vorgesehenen Teil des Feldes befinden, und dass die nach der Ausgleichs-Bearbeitungsspur zur Bearbeitung vorgesehene Bearbeitungsspur volle Arbeitsbreite hat.

Der Erfindung liegt daher die Aufgabe zugrunde ein Verfahren zum Betreiben einer Verteilmaschine, insbesondere einer Sämaschine, zu schaffen, welches es vorsieht, bereits besäte Bereiche zu schonen.
Diese Aufgabe wird erfindungsgemäß durch ein Verfahren mit den Merkmalen des unabhängigen Anspruchs 1 gelöst.
Infolge dieser Maßnahme wird erreicht, dass durch das erfindungsgemäße Verfahren ein Bearbeitungsplan bestimmt wird, welcher eine zumindest annährend optimal flächendeckende Bearbeitung ermöglicht und zugleich bereits besäte Bereiche nicht zur mehrfachen Überfahrt vorsieht. Vielmehr kann die Ausgleichs-Bearbeitungsspur an beliebiger Stelle im Feld abgearbeitet werden, was den Vorteil hat, dass die abgeschalteten Teilbreiten sich in einem noch nicht bearbeiteten, also in einem noch zu bearbeitenden Teil des Feldes bewegen können. Weiter vorteilhaft ist, dass durch die Bestimmung einer Bearbeitungsspur mit voller Arbeitsbreite nach der Ausgleichs-Bearbeitungsspur erreicht wird, dass sich alle Ausbringelemente stets innerhalb der Feldgrenzen bewegen.
In einer vorteilhaften Weiterbildung des erfindungsgemäßen Verfahrens ist vorgesehen, dass die Ausgleichs-Bearbeitungsspur zur Bearbeitung vor der zuletzt zur Bearbeitung vorgesehene Bearbeitungsspur vorgesehen ist, wobei die zuletzt zur Bearbeitung vorgesehene Bearbeitungsspur mit voller Arbeitsbreite bestimmt wird. Diese Weiterbildung hat den Vorteil, dass durch die Ausgleichs-Bearbeitungsspur nahe dem Feldende eventuelle Fehler aus vorhergegangenen Anschlussfahrten zusätzlich ausgeglichen werden. Zugleich ist sichergestellt, dass sich die Ausbringelemente bei der zuletzt zur Bearbeitung vorgesehenen Bearbeitungsspur weder außerhalb der Feldgrenzen, noch in bereits besäten Teilen des Feldes befinden. Dies ist besonders vorteilhaft, da auf diese Weise bereits besäte Bereiche weiterhin nicht zur mehrfachen Überfahrt vorgesehen werden, selbst wenn Fehler aus Anschlussfahrten ausgeglichen werden müssen. In dieser Weiterbildung wird die Ausgleichs-Bearbeitungsspur stetig, zumindest jeweils nahe dem Ende der Bearbeitung einer Bearbeitungsspur, neu berechnet. Dies hat den Vorteil, dass sich summierende Fehler aus unzureichend genau ausgeführten Anschlussfahrten zumindest annährend optimal ausgeglichen werden können. Da sich durch jede Bearbeitungsspur eine weitere Änderung der Ausgleichs-Bearbeitungsspur ergeben kann, ist es besonders zweckmäßig die Ausgleichs-Bearbeitungsspur in regelmäßigen Abständen neu zu berechnen.

In einer weiteren vorteilhaften Weiterbildung der Erfindung sind benachbarte Bearbeitungsspuren zur Bearbeitung in alternierender Richtung vorgesehen. In vorteilhafter Weise lassen sich die benachbarten Bearbeitungsspuren so auf besonders kurzem Wege erreichen. Diese Weiterbildung bezweckt folglich einen besonders zeitsparenden und bodenschonenden Bearbeitungsplan.

In einer anderen zweckmäßigen Weiterbildung des erfindungsgemäßen Verfahrens werden Informationen über Ausgleichs-Bearbeitungsspuren angezeigt. Der Benutzer wird folglich über die Notwendigkeit und den Zeitpunkt zum Ausführen einer Ausgleichs-Bearbeitungsspur in Kenntnis gesetzt. Weiter ist es möglich, dass der Benutzer eine Auswahl zwischen alternativen Ausgleichs-Bearbeitungsspuren erhält und so selbst entscheiden kann wann er diese ausführen möchte. Der erfindungsgemäß bestimmte Bearbeitungsplan kann somit flexibel vom Benutzer an sämtliche Präferenzen und Begebenheiten angepasst werden.

Erfindungsgemäß ist vorgesehen, dass die Ausgleichs-Bearbeitungsspur nicht am Feldrand abgearbeitet wird und sich die abgeschalteten Teilbreiten in einem noch zu bearbeitenden Teil des Feldes bewegen, und dass die Bearbeitungsspur am Feldrand die volle Arbeitsbreite aufweist und zuletzt abgearbeitet wird. In besonders einfacher Weise wird so sichergestellt, dass aus den vorstehend beschriebenen Gründen mittels des erfindungsgemäßen Verfahrens ein verbessertes Arbeitsergebnis erreicht wird.

Eine fehlerhafte Ausführung, welche die im Stand der Technik bekannten Nachteile aufweist, wird in zweckmäßiger Weise ausgeschlossen.
Weitere Einzelheiten der Erfindung sind der Beispielsbeschreibung und den Zeichnungen zu entnehmen. Die Zeichnungen zeigen
- Fig.1: ein Ackerschlepper mit einer angehangenen Sämaschine, die zum Ausführen des erfindungsgemäßen Verfahren eingerichtet ist, in Draufsicht,
- Fig.2: ein Ausschnitt aus einem Bearbeitungsplan, der durch das im Stand der Technik bekannte Verfahren bestimmt wurde,
- Fig.3: ein Ausschnitt aus einem nichterfindungsgemäß bestimmten Bearbeitungsplan, bei dem die Ausgleichs-Bearbeitungsspur im Feldinnern liegt,
- Fig.4: ein Ausschnitt aus einem erfindungsgemäß bestimmten Bearbeitungsplan, bei dem die Ausgleichs-Bearbeitungsspur nahe der Feldgrenze liegt, und
- Fig.5: ein Ausschnitt aus einem weiteren Bearbeitungsplan, bei dem ein Einfahrpunkt und eine Einfahr-Kurve berechnet wurden.

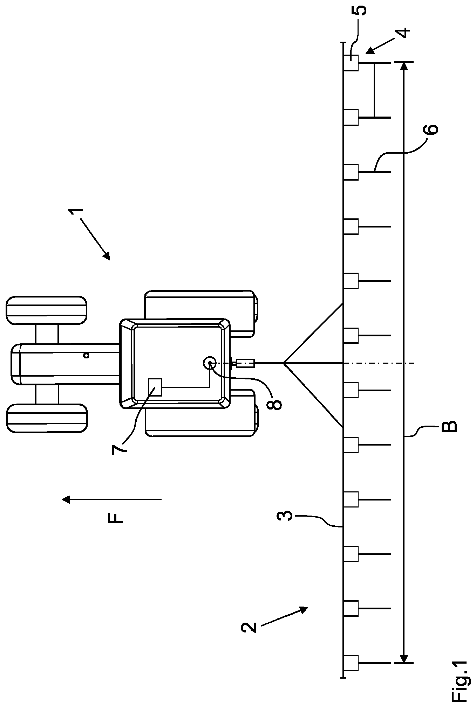

Ein Ackerschlepper 1 mit einer angehangenen und als Einzelkornsämaschine ausgebildeten Sämaschine 2 ausgeführten Verteilmaschine ist in Fig.1 zu sehen. Die Sämaschine 2 weist einen zentralen Querbalken 3 auf, der sich quer zur Fahrtrichtung F erstreckt. An diesem Querbalken 3 ist eine Mehrzahl von Ausbringelementen 4 angeordnet. Jedes Ausbringelement 4 weist in der gezeigten Ausführungsform einen Saatgutbehälter 5, ein unter dem Saatgutbehälter 5 angeordnetes und daher verdecktes Dosierorgan und Bodenbearbeitungswerkzeuge 6 auf.
Zur Bearbeitung eines Feldes werden zuerst die Saatgutbehälter 5 mit dem auszubringenden Saatgut gefüllt. Anschließend werden während der Überfahrt des Feldes die Dosierorgane der gewünschten Ausbringelemente aktiviert, so dass Saatgut aus den jeweiligen Saatgutbehältern 5 zu den
Bodenbearbeitungswerkzeugen 6 gefördert wird. Die Dosierorgane lassen sich hierbei unabhängig voneinander schalten. Das so geförderte Saatgut wird schließlich von den Bodenbearbeitungswerkzeugen 6, welche zuerst in den Boden eingreifen, um eine Furche zur Ablage des Saatgutes zu formen, und den Boden anschließend wieder verdichten, um die Furche über dem Saatgut zu schließen, in den Boden eingearbeitet. So entsteht hinter der Sämaschine 2 ein besäter Bereich des Feldes.

Die Sämaschine 2 weist zwischen den äußersten Ausbringelementen 4 grundsätzlich eine Arbeitsbreite B auf. Die Ausbringelemente 4 sind über die Arbeitsbreite B gleichmäßig verteilt angeordnet. Durch gezieltes Zu- und Abschalten von Dosierorganen einzelner Ausbringelemente 4 lassen sich diese in beliebige Teilbreiten unterteilen. Da sich die Dosierorgane der Ausbringelemente 4 unabhängig voneinander schalten lassen, kann eine Teilbreite auch aus einem einzigen Ausbringelement 4 bestehen. Der bei Überfahrt des Feldes entstehende besäte Bereich lässt sich durch die Verwendung der Teilbreiten nahezu beliebig variieren. Üblicherweise wird eine, gegenüber der Arbeitsbreite B, reduzierte Breite besät, indem ein oder mehrere Ausbringelemente 4 bspw. von außen beginnend durch Deaktivierung des jeweiligen Dosierorgans abgeschaltet werden. Die Bodenbearbeitungswerkzeuge 6 der abgeschalteten Ausbringelemente 4 verbleiben hierbei in Arbeitsstellung, d.h. sie bearbeiten den Boden auch wenn das zugehörige Dosierorgan abgeschaltet ist.

Des Weiteren umfasst die Sämaschine 2 ein Steuerungssystem 7. Das Steuerungssystem 7 umfasst sowohl einen Positionssensor 8 als auch einen Speicher zum Speichern von Daten und ist in der gezeigten Ausführungsform auf dem Ackerschlepper 1 angeordnet. Der Positionssensor 8 ist üblicherweise als GPS-Sensor ausgeführt und dient als Referenz für die aktuelle Position der Arbeitskombination aus Ackerschlepper 1 und Sämaschine 2 im Feld. Als Positionssensor 8 ist darüber hinaus ebenso jeder andere Sensor denkbar, der es vermag die obenstehende Referenz zu detektieren. In dem Speicher des Steuerungssystems 7 sind die geometrischen Daten der Sämaschine 2, d.h. die Arbeitsbreite B und die Teilbreiten, also die Positionen der Ausbringelemente 4 am Querbalken 3, abgespeichert. Über die Kombination von mittels des Positionssensors 8 detektierter Referenzposition und abgespeicherten geometrischen Daten der Sämaschine 2 ist das Steuerungssystem 7 dazu eingerichtet die Teilbreiten in Abhängigkeit von ihrer Position unabhängig voneinander zu schalten.

Außerdem ist das Steuerungssystem 7 in der Lage feldspezifische Daten, wie Feldgrenzen 12, eines mehrseitigen Feldes zu speichern und zu verarbeiten. Zur Planung der Feldarbeit ist das Steuerungssystem 7 so auf Basis der geometrischen Daten der Sämaschine 2 dazu eingerichtet, einen Bearbeitungsplan 9 mit einer Anzahl gleichförmig über das Feld verteilter Bearbeitungsspuren 10 zu bestimmen. Hierbei werden Bearbeitungsspuren 10 mit der vollen Arbeitsbreite B der Sämaschine 2 bevorzugt, da aus der Bearbeitung solcher Bearbeitungsspuren 10 eine besonders hohe Flächenleistung resultiert. Eine Bearbeitungsspur 10 ist folglich die Fläche, welche in einer Überfahrt der Sämaschine 2 zur Bearbeitung vorgesehen ist. Jede Bearbeitungsspur 10 weist eine Mittellinie 10a auf, auf der der Ackerschlepper 1 mit angehangener Sämaschine 2 die jeweilige Bearbeitungsspur 10 entlang fahren kann.

Da sich ein Feld jedoch regelmäßig nicht ausschließlich mit Bearbeitungsspuren 10 voller Arbeitsbreite B bearbeiten lässt, ist das Steuerungssystem 7 dazu eingerichtet, zumindest eine Ausgleichs-Bearbeitungsspur 11 mit zumindest teilweise abgeschalteten Teilbreiten zu bestimmen. Eine Ausgleichs-Bearbeitungsspur 11 ist folglich eine, gegenüber einer Bearbeitungsspur 10 mit voller Arbeitsbreite B, reduzierte Fläche zur zumindest annährend flächendeckenden Bearbeitung eines Feldes.

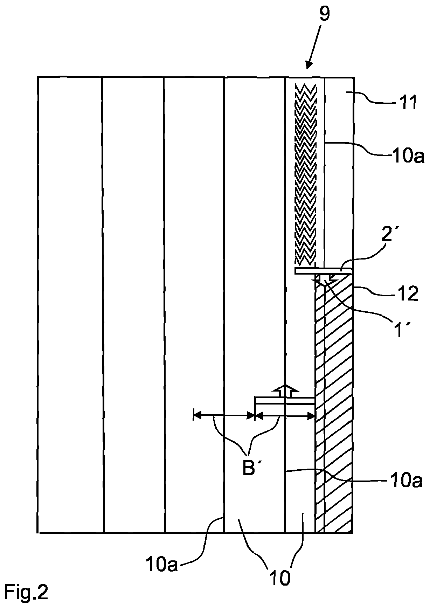

In Fig.2 ist ein Ausschnitt aus einem Bearbeitungsplan 9, der durch das im Stand der Technik bekannte Verfahren bestimmt wurde, zu sehen. Symbolisch dargestellt sind der Ackerschlepper 1' und die Sämaschine 2'. Für das Feld, welches eingegrenzt wird durch die Feldgrenzen 12, wurden vom Steuerungssystem 7 gleichförmig verteilte Bearbeitungsspuren 10 mit vorzugsweise voller Arbeitsbreite B' der Sämaschine 2 bestimmt. Da die Anzahl von Bearbeitungsspuren 10 mit voller Arbeitsbreite B' keine ganzzahlige Zahl ist, wird an der rechten Feldgrenze 12 eine Ausgleichs-Bearbeitungsspur 11 bestimmt, die zuletzt zur Bearbeitung vorgesehen ist. Der Ackerschlepper 1' befindet sich gerade bei der Bearbeitung der Ausgleichs-Bearbeitungsspur 11.

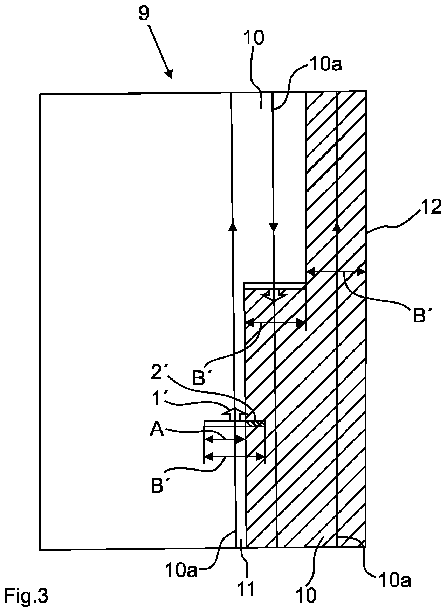

Da, wie vorstehend beschrieben, sich auch die Bodenbearbeitungswerkzeuge 6 abgeschalteter Teilbreiten in Arbeitsstellung befinden, ist an den Feldgrenzen 12 darauf zu achten, dass sich alle Ausbringelemente 4 stets innerhalb der Feldgrenzen 12 befinden. Anderenfalls kann es zu Beschädigungen der Ausbringelemente 4 kommen und der Boden außerhalb der Feldgrenze 12 würde unerwünschter Weise bearbeitet. In der Folge wird die Mittellinie 10a der Ausgleichs-Bearbeitungsspur 11 mit einem Abstand der der halben Arbeitsbreite B der Sämaschine 2 entspricht zur Feldgrenze 12 vom Steuerungssystem 7 bestimmt. Das wiederum führt dazu, dass die für die Ausgleichs-Bearbeitungsspur 11 abgeschalteten Teilbreiten sich in einem Teil des Feldes bewegen, welcher bereits besät wurde. Problematisch ist hierbei, dass dadurch der bereits besäte Bereich von den Bodenbearbeitungswerkzeugen 6 der abgeschalteten Teilbreiten durchmischt wird. Dieser Bereich des Feldes wird in Fig.2 gekennzeichnet durch die gezackt markierte Fläche. Nachteiliger Weise wird das bereits abgelegte Saatgut nachträglich bewegt, was die spätere Ernte schmälert und der Boden wird zusätzlich verdichtet.
Zur Vermeidung vorstehend beschriebener Nachteile gemäß Fig.2 sieht ein erster, mittels dem nicht-erfindungsgemäßen Verfahren bestimmter, Bearbeitungsplan 9 gemäß Fig.3 daher vor, dass vom Steuerungssystem 7 bestimmt wird, dass die zur Bearbeitung der Ausgleichs-Bearbeitungsspur 11 abgeschalteten Teilbreiten sich in einem noch zur Bearbeitung vorgesehenen Teil des Feldes befinden, wie es in Fig.3 zu sehen ist. Die Teilbreiten der Sämaschine 2' werden für die Bearbeitung der Ausgleichs-Bearbeitungsspur 11 in diesem Fall vom rechten Rand ihrer Arbeitsbreite B' beginnend bis auf eine für die Ausgleichs-Bearbeitungsspur 11 passende Ausgleichs-Breite A abgeschaltet und befinden sich folglich im noch zur Bearbeitung vorgesehenen Teil des Feldes. Weiter wird vom Steuerungssystem 7 bestimmt, dass die nach der Ausgleichs-Bearbeitungsspur 11 zur Bearbeitung vorgesehene, benachbarte

Bearbeitungsspur 10 die volle Arbeitsbreite B aufweist und zur Bearbeitung in alternierender Richtung vorgesehen ist. Wie in Fig.3 zu sehen ist, können infolge dieser Maßnahme die weiteren Bearbeitungsspuren 10 zur möglichst flächendeckenden Bearbeitung des Feldes bis möglichst an die Feldgrenze 12 die volle Arbeitsbreite B' aufweisen. In einfacher Weise wird so erreicht, dass das Feld anhand dieses ersten Bearbeitungsplans 9 mit möglichst hoher Flächenleistung bearbeitet wird, wobei bereits besäte Bereiche bewusst geschont werden und der Beschädigung von Ausbringelementen 4 vorgebeugt wird.
Der so bestimmte Arbeitsplan 9 ist zur Anzeige auf einem dem Steuerungssystem 7 zugeordneten, geeigneten Display vorgesehen. Als Display wird jede geeignete Anzeigevorrichtung verstanden. In der in Fig.1 gezeigten Ausführungsform ist das Steuerungssystem 7, welches beispielsweise ein Bordcomputer mit integriertem oder externem Speicher sein kann, idealer Weise auf dem Ackerschlepper 1 angeordnet, so dass das Display einem Benutzer dort zur Verfügung steht. Das Display kann als berührungsempfindlicher Bildschirm ausgeführt sein und/oder Bedienelemente, wie bspw. Knöpfe, umfassen, so dass der Benutzer Eingaben für das Steuerungssystem 7 tätigen kann. Das Steuerungssystem 7 ist somit dazu eingerichtet, dem Benutzer Informationen über Ausgleichs-Bearbeitungsspuren 11 anzuzeigen. Vorteilhafter Weise werden diese Informationen unmittelbar nachdem der Bearbeitungsplan 9 bestimmt wurde und/oder verändert wurde auf dem Display angezeigt, um den Benutzer über die Notwendigkeit zum Ausführen einer Ausgleichs-Bearbeitungsspur 11 aufzuklären. Je nach Präferenz kann der Benutzer in der Folge entscheiden wann und unter welchen Bedingungen er die Ausgleichs-Bearbeitungsspur 11 bearbeiten will und diese Entscheidung in das Steuerungssystem 7 mit Hilfe des Displays eingeben. Der Bearbeitungsplan 9 lässt sich somit flexibel anpassen und gibt dem Benutzer auch mittels der Mittellinien 10a eine wertvolle Orientierungshilfe zur Lenkung der Arbeitskombination aus Ackerschlepper 1 und Sämaschine 2 bei der Bearbeitung benachbarter Bearbeitungsspuren 10 in alternierender Richtung.

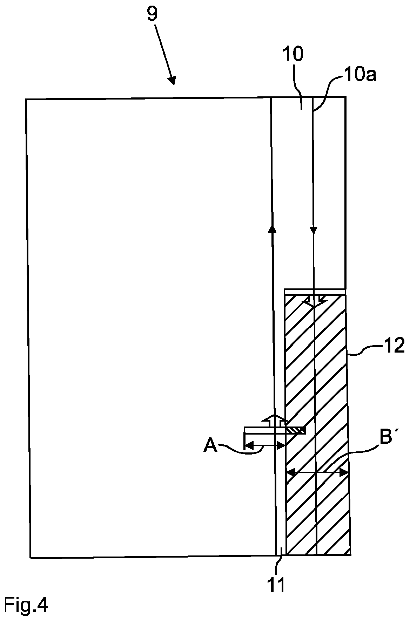

In Fig.4 ist ein weiterer Ausschnitt aus einem erfindungsgemäß bestimmten Bearbeitungsplan 9 zu sehen. Bei diesem Bearbeitungsplan 9 ist die Ausgleichs-Bearbeitungsspur 11 zur Bearbeitung vor der zuletzt zur Bearbeitung vorgesehenen Bearbeitungsspur 10 vorgesehen, wobei diese Bearbeitungsspur 10 am Feldrand, somit an der Feldgrenze 12, mit voller Arbeitsbreite B' bestimmt wird. Dieser Bearbeitungsplan 9 hat zusätzlich den Vorteil, dass durch die Ausführung der Ausgleichs-Bearbeitungsspur 11 zu dem spätest möglichen Zeitpunkt eventuelle Fehler aus vorrangegangenen Anschlussfahrten in besonders einfacher Weise ausgeglichen werden können.

Fehler aus vorrangegangenen Anschlussfahrten können bewirken, dass die Ausgleichs-Arbeitsbreite A entweder sinkt, falls Unterschneidungen, d.h. unbesäte Bereiche, gefahren werden, oder steigt, falls Überschneidungen, d.h. doppelt bearbeitete Bereiche, gefahren werden. In der Folge können sich die Fehler ebenso summieren oder auch gegenseitig aufheben, so dass die Ausgleichs-Arbeitsbreite A auf die entsprechende Restbreite vom Steuerungssystem 7 festgelegt wird. Die so bestimmte Ausgleichs-Bearbeitungsspur 11 wird dann nicht am Feldrand, d.h. nicht an der Feldgrenze 12, abgearbeitet und die abgeschalteten Teilbreiten bewegen sich in einem noch zu bearbeitenden Teil des Feldes. Die anschließende Bearbeitungsspur 10 wird zuletzt bearbeitet und weist die volle Arbeitsbreite B' auf.

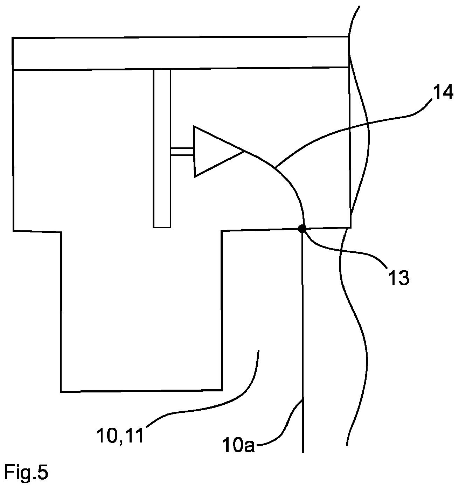

Um Fehler aus Anschlussfahrten möglichst zu vermeiden, umfasst das Verfahren einen weiteren Schritt, in dem zum Erreichen der nächsten Bearbeitungsspur 10 und/oder Ausgleichs-Bearbeitungsspur 11 ein Einfahrpunkt 13 berechnet wird. Weiter wird anhand dieses Einfahrpunktes 13 und basierend auf der aktuellen Position der Arbeitskombination aus Ackerschlepper 1 und Sämaschine 2, sowie den geometrischen Daten der Sämaschine 2, eine Einfahr-Kurve 14 bestimmt, wie in Fig.5 zu sehen ist. Da, wie vorstehend beschrieben, benachbarte Bearbeitungsspuren 10 zur Bearbeitung in alternierender Richtung vorgesehen sind, wird üblicher Weise am Ende einer Bearbeitungsspur 10 bzw. einer Ausgleichs-Bearbeitungsspur 11 ein Wendevorgang eingeleitet. Um die Arbeitskombination nun aus dem Vorgewende möglichst ohne Unter- oder Überschneidungen, somit möglichst fehlerfreier Anschlussfahrt, auf die nächste Bearbeitungsspur 10 und/oder Ausgleichs-Bearbeitungsspur 11 zu verbringen, wird der Einfahrpunkt 13 üblicher Weise mit Abstand der halben Arbeitsbreite B zur vorher bearbeiteten Spur von dem Steuerungssystem 7 berechnet. Weiter liegt der Einfahrpunkt 13 an der Grenze zwischen Vorgewende und Bearbeitungsspur 10 bzw. Ausgleichs-Bearbeitungsspur 11 und bildet somit den Startpunkt der jeweiligen Spur, wie Fig.5 zeigt.

Da sich die Sämaschine 2 hinter dem Ackerschlepper 1 quer zur Fahrtrichtung F bewegt, ist es weiter notwendig eine Einfahr-Kurve 14 mittels des Steuerungssystems 7 zu bestimmen. Die Einfahr-Kurve 14 soll einen möglichst tangentialen Übergang in die Bearbeitungsspur 10 bzw. Ausgleichs-Bearbeitungsspur 11 ermöglichen, so dass keine Unter- oder Überschneidungen beim Einfahren entstehen. Somit berechnet das Steuerungssystem 7 anhand der detektierten und gespeicherten Informationen einen möglichst optimalen Übergang in die Mittellinie 10a der jeweiligen Spur, so dass die Einfahr-Kurve 14 eine Verlängerung vor der Mittellinie 10a bildet, wie in Fig.5 gezeigt.

Zusammenfassend wird durch die vorliegende Erfindung ein Verfahren zum Betreiben einer Sämaschine 2 geschaffen, welches eine möglichst flächendeckende Bearbeitung mit hoher Flächenleistung anstrebt und zugleich die Nachteile des Standes der Technik zumindest annährend aufhebt, indem bereits besäte Flächen geschont werden.

### Bezugszeichenliste

- 1, 1': Ackerschlepper
- 2, 2': Sämaschine
- 3: Querbalken
- F: Fahrtrichtung
- 4: Ausbringelement
- 5: Saatgutbehälter
- 6: Bodenbearbeitungswerkzeug
- B, B': Arbeitsbreite
- 7: Steuerungssystem
- 8: Positionssensor
- 9: Bearbeitungsplan
- 10: Bearbeitungsspur
- 10a: Mittellinie
- 11: Ausgleichs-Bearbeitungsspur
- 12: Feldgrenze
- A: Ausgleichs-Breite
- 13: Einfahrpunkt
- 14: Einfahr-Kurve

## Patentansprüche

1. Verfahren zum Betreiben einer Verteilmaschine, insbesondere Sämaschine (2), mit mehreren über die Arbeitsbreite (B) der Verteilmaschine zumindest annährend gleichmäßig verteilt angeordneten Ausbringelementen (4) und einem Steuerungssystem (7), wobei die Ausbringelemente (4) in zumindest zwei zu- und abschaltbare Teilbreiten unterteilt sind, und wobei das Steuerungssystem (7) zumindest einen Positionssensor (8) umfasst und dazu eingerichtet ist,
*a*. die Teilbreiten in Abhängigkeit von ihrer Position unabhängig voneinander zu schalten, und
*b.* die geometrischen Daten der Arbeitsbreite (B) und der zumindest zwei Teilbreiten der Verteilmaschine in einem Speicher des Steuerungssystems (7) zu speichern,
*c*. eine Anzahl von Bearbeitungsspuren (10) für ein mehrseitiges Feld auf Basis der geometrischen Daten der Verteilmaschine zu bestimmen,
*d.* einen Bearbeitungsplan (9) aus über das Feld gleichförmig verteilte Bearbeitungsspuren (10) zu erzeugen,
*e*. falls die Anzahl von Bearbeitungsspuren (10) mit voller Arbeitsbreite (B) für das Feld keine ganzzahlige Zahl ist, zumindest eine Ausgleichs-Bearbeitungsspur (11) mit zumindest teilweise abgeschalteten Teilbreiten zu bestimmen, ferner zu bestimmen,
dass die zur Bearbeitung der Ausgleichs-Bearbeitungsspur (11) abgeschalteten Teilbreiten sich in einem noch zur Bearbeitung vorgesehenen Teil des Feldes befinden, und die nach der Ausgleichs-Bearbeitungsspur (11) zur Bearbeitung vorgesehenen Bearbeitungsspur (10) mit voller Arbeitsbreite (B) zu bestimmen, **dadurch gekennzeichnet, dass**
- die Ausgleichs-Bearbeitungsspur (11) nicht am Feldrand abgearbeitet wird und sich die abgeschalteten Teilbreiten in einem noch zu bearbeitenden Teil des Feldes bewegen, wobei die Ausgleichs-Bearbeitungsspur (11) vor der zuletzt vorgesehenen Bearbeitungsspur vorgesehen ist, welche Bearbeitungsspur (10) am Feldrand die volle Arbeitsbreite (B) aufweist und zuletzt abgearbeitet wird.

2. Verfahren nach Anspruch 1, bei dem die Ausgleichs-Bearbeitungsspur (11) zur Bearbeitung vor der zuletzt zur Bearbeitung vorgesehene Bearbeitungsspur (10) vorgesehen ist, wobei die zuletzt zur Bearbeitung vorgesehene Bearbeitungsspur (10) mit voller Arbeitsbreite (B) bestimmt wird.

3. Verfahren nach zumindest einem der vorstehenden Ansprüche, bei dem benachbarte Bearbeitungsspuren (10, 11) zur Bearbeitung in alternierender Richtung vorgesehen sind.

4. Verfahren nach zumindest einem der vorstehenden Ansprüche, bei dem Informationen über Ausgleichs-Bearbeitungsspuren (11) angezeigt werden.

## Claims

1. Method for operating a distributing machine, in particular seeder (2), having a plurality of spreading elements (4) which are distributed at least approximately uniformly over the working width (B) of the distributing machine, and having a control system (7), wherein the spreading elements (4) are divided into at least two partial widths which can be switched on and off, and wherein the control system (7) comprises at least one position sensor (8) and is configured
*a.* to operate the partial widths independently of one another as a function of their position, and
*b.* to store the geometrical data regarding the working width (B) and the at least two partial widths of the distributing machine in a memory of the control system (7),
*c*. to determine a number of processing lanes (10) for a multi-sided field on the basis of the geometrical data of the distributing machine,
*d*. to produce a management plan (9) from processing lanes (10) distributed uniformly over the field,
*e*. if the number of processing lanes (10) of a full working width (B) for the field is not an even number, of determining at least one equalizing processing lane (11) where partial widths are at least partially switched off,
furthermore of determining that the partial widths switched off for processing the equalizing processing lane (11) are located in a part of the field still provided for processing, and of determining the processing lane (10) of a full working width (B) that is provided for processing after the equalizing processing lane (11), **characterized in that**
- the equalizing processing lane (11) is not processed at the field edge and the switched-off partial widths move in a part of the field that is yet to be processed, wherein the equalizing processing lane (11) is provided before the processing lane last provided, which processing lane (10) has the full working width (B) at the field edge and is processed last.

2. Method according to Claim 1, in which the equalizing processing lane (11) is provided for processing before the processing lane (10) of a full working width (B) that is provided for processing last is determined.

3. Method according to at least one of the preceding claims, in which adjacent processing lanes (10, 11) are provided for processing in an alternating direction.

4. Method according to at least one of the preceding claims, in which information about equalizing processing lanes (11) is displayed.

## Revendications

1. Procédé de fonctionnement d'un épandeur, en particulier d'un semoir (2), comportant plusieurs éléments d'épandage (4) répartis au moins approximativement de manière uniforme sur la largeur de travail (B) de l'épandeur et un système de commande (7), dans lequel les éléments d'épandage (4) sont répartis en au moins deux sections de largeur partielle qui peuvent être activées et désactivées, et dans lequel le système de commande (7) comprend au moins un capteur de position (8) et est conçu
a. pour modifier les sections de largeur partielle indépendamment les unes des autres en fonction de leur position, et
b. pour stocker les données géométriques de la largeur de travail (B) et d'au moins deux sections de largeur partielle de l'épandeur dans une mémoire du système de commande (7),
c. pour déterminer un nombre de bandes de traitement (10) pour un champ à plusieurs côtés sur la base des données géométriques de l'épandeur,
d. pour générer un plan de traitement (9) à partir de bandes de traitement (10) uniformément réparties sur le champ,
e. dans le cas où le nombre de bandes de traitement (10) présentant une largeur de travail (B) totale pour le champ n'est pas un nombre entier, pour déterminer au moins une bande de traitement de compensation (11) présentant des sections de largeur partielle au moins partiellement désactivées, et pour déterminer en outre que
les sections de largeur partielle désactivées pour le traitement de la bande de traitement de compensation (11) sont situées dans une partie du champ qui reste à traiter,
et pour déterminer la bande de traitement (10) destinée à être traitée après la bande de traitement de compensation (11) avec une largeur de travail (B) totale, **caractérisé en ce que**
- la bande de traitement de compensation (11) n'est pas traitée en bordure de champ et les sections de largeur partielle désactivées se déplacent dans une partie du champ qui reste à traiter, dans lequel la bande de traitement de compensation (11) est prévue avant la bande de traitement prévue en dernier lieu, laquelle bande de traitement (10) présente la largeur de travail (B) totale en bordure de champ et est traitée en dernier lieu.

2. Procédé selon la revendication 1, dans lequel la bande de traitement de compensation (11) est prévue pour le traitement avant la bande de traitement (10) prévue en dernier lieu pour le traitement, dans lequel la bande de traitement (10) prévue en dernier lieu pour le traitement est déterminée avec une largeur de travail (B) totale.

3. Procédé selon au moins l'une des revendications précédentes, dans lequel il est prévu des bandes de traitement adjacentes (10, 11) pour un traitement en sens alterné.

4. Procédé selon au moins l'une des revendications précédentes, dans lequel des informations concernant les bandes de traitement de compensation (11) sont affichées.
